# EUROPÄISCHE PATENTSCHRIFT

(11) **EP 3 514 863 B1**
(45) Veröffentlichungstag und Bekanntmachung des Hinweises auf die Patenterteilung: **23.12.2020**
(21) Anmeldenummer: 19152915.5
(22) Anmeldetag: 21.01.2019
(51) Int. Cl.: H01M 4/139, H01M 10/04, H01M 10/0583, B65H 45/101, H01M 4/04

(54) **VERFAHREN ZUM HERSTELLEN EINES ELEKTRODENSTAPELS FÜR ENERGIESPEICHER, STAPELANLAGE**
METHOD FOR THE PRODUCTION OF AN ELECTRODE STACK FOR ENERGY STORAGE, DEVICE FOR STACKING
PROCÉDÉ DE FABRICATION D'UN EMPILEMENT D'ÉLECTRODES POUR L'ACCUMULATEUR D'ÉNERGIE, INSTALLATION D'EMPILEMENT

(30) Priorität: 22.01.2018 DE 102018200958
(43) Veröffentlichungstag der Anmeldung: 24.07.2019
(73) Patentinhaber: VOLKSWAGEN AKTIENGESELLSCHAFT, 38440 Wolfsburg (DE)
(72) Erfinder: Böhm, Dennis, 38302 Wolfenbüttel (DE)
(74) Vertreter: Clarenbach, Carl-Philipp

(56) Entgegenhaltungen:
- EP-A2- 1 261 063
- WO-A1-2012/099205
- DE-A1-102010 055 617
- DE-B3-102012 019 975

## Beschreibung

Die Erfindung betrifft ein Verfahren zum Herstellen eines Elektrodenstapels für einen Energiespeicher eines Kraftfahrzeugs, wobei als Elektroden Kathoden und Anoden abwechselnd unter Zwischenschaltung eines Separators aufeinander gestapelt werden, wobei der Separator erst mit den Kathoden und Anoden belegt wird, sodass ein Elektrodenstreifen entsteht, und wobei danach der Elektrodenstreifen zum Stapeln der Kathoden und Anoden aufeinander mehrfach gefaltet wird.

Weiterhin betrifft die Erfindung eine Stapelanlage zum Herstellen eines Elektrodenstapels, insbesondere zur Durchführung des oben genannten Verfahrens, mit einer Falteinrichtung zum Falten eines Elektrodenstreifens, der einen mit Anoden und Kathoden als Elektroden belegten Separatorstreifen aufweist, zu einem Elektrodenstapel, bei welchem Anoden und Kathoden abwechselnd aufeinander unter Zwischenschaltung des Separators gestapelt sind.

Energiespeicher für Kraftfahrzeuge weisen üblicherweise Anoden und Kathoden auf, die übereinander gestapelt und durch jeweils einen Separator voneinander getrennt sind. Hierdurch werden Batteriezellen gebildet, die elektrisch miteinander verbunden werden, um einen Energiespeicher zu formen. Es ist bekannt, einen derartigen Elektrodenstapel durch ein Aufeinanderstapeln der einzelnen Elemente herzustellen. Kathode, Anode und Separator werden dabei unabhängig voneinander hergestellt und nacheinander aufeinander aufgestapelt. Das Stapelverfahren wird häufig durch Roboter durchgeführt, welche die einzelnen Elemente greifen und positionsgenau aufeinander stapeln. Aufgrund der hierfür erforderlichen komplexen Greifbewegungen ist nur eine begrenzte Montagegeschwindigkeit erreichbar und ein konstruktiv hoher Aufwand erforderlich.

Um das Stapeln der einzelnen Bestandteile zu erleichtern, wird in der Offenlegungsschrift DE 10 2010 055 617 A1 vorgeschlagen, dass die Elektroden auf einem Separatorstreifen abgelegt und der mit den Elektroden versehene Separatorstreifen z-förmig gefaltet wird, um aus den Separatorstreifen den Elektrodenstapel zu bilden. Wie genau das Falten erfolgen soll, wird jedoch nicht offenbart. Den Figuren ist lediglich zu entnehmen, dass der Elektrodenstreifen durch eine vertikale Bewegung nach unten gefaltet wird. Dies wird auch durch die Offenlegungsschrift WO 2016/192717 A1 als Methode zum Falten eines Bahnmaterials vorgeschlagen. Dabei soll auch ein Elektrodenstapel hergestellt werden. Die Faltanlage faltet dabei einen zugeführten Elektrodenstreifen schrittweise z-förmig zusammen, wobei der Elektrodenstreifen von oben der Faltanlage zugeführt wird.

Des Weiteren ist aus der Offenlegungsschrift EP 1 261 063 A2 ein gattungsgemäßes Verfahren zum Herstellen eines Elektrodenstapels bekannt.

Der Erfindung liegt die Aufgabe zugrunde, ein verbessertes Verfahren sowie eine verbesserte Falt- beziehungsweise Stapelanlage zu schaffen, welche in einfacher Art und Weise ein vorteilhaftes Falten des Elektrodenstreifens zu dem Elektrodenstapel erlauben, wobei insbesondere eine Prozessintegration der Stapelanlage beziehungsweise des Faltvorgangs in einen Herstellungsprozess des Elektrodenstreifens integrierbar sein soll.

Die der Erfindung zugrunde liegende Aufgabe wird durch ein Verfahren mit den Merkmalen des Anspruchs 1 gelöst. Dies hat den Vorteil, dass, ausgehend von der Herstellung des Elektrodenstreifens, der Elektrodenstreifen direkt weiter der Stapelanlage beziehungsweise dem Falten zugeführt wird. Dadurch sind der Faltprozess und die Herstellung des Elektrodenstreifens vorteilhaft miteinander kombiniert. Dies wird erfindungsgemäß dadurch erreicht, dass der Elektrodenstreifen für das Falten in einer horizontalen Ebene ausgerichtet und davon ausgehend abschnittsweise oder insgesamt zwischen den Elektroden gefaltet wird. Wie auch im Stand der Technik erfolgt das Falten zwischen den Elektroden in einem elektrodenfreien Bereich des Separatorstreifens, der im Vergleich zu dem mit Elektroden versehenen Bereich flexibler und damit leicht zu verformen beziehungsweise zu falten ist, insbesondere ohne dass dadurch die Elektroden beschädigt werden. Im Unterschied zu den bekannten Lösungen liegt der Elektrodenstreifen jedoch beim Falten in einer horizontalen Ebene vor, wodurch erreicht wird, dass beispielsweise der Elektrodenstreifen, der in einem vorhergehenden Arbeitsschritt mit den Elektroden belegt wurde, direkt weiter dem Faltvorgang horizontal zugeführt werden kann.

Gemäß einer bevorzugten Weiterbildung der Erfindung ist vorgesehen, dass der Elektrodenstreifen vor dem Falten laminiert wird. Durch das Laminieren werden in vorteilhafter Weise die Elektroden auf dem Separatorstreifen befestigt und dauerhaft gehalten. Insbesondere wird der Elektrodenstreifen nach dem Belegen mit Kathoden, insbesondere auf einer ersten Seite des Separatorstreifens, einmal und nach dem Belegen mit Anoden, insbesondere auf der anderen Seite oder Rückseite des Separatorstreifens, ein andermal laminiert. Wird der Separatorstreifen zuerst mit Kathoden belegt, so wird erst mit den Kathoden laminiert, wird der Separatorstreifen zuerst mit Anoden belegt, so werden diese auch zuerst laminiert. Durch das zweimalige Laminieren wird sichergestellt, dass die einmal aufgebrachten Elektroden beziehungsweise Anoden oder Kathoden sicher an dem Elektrodenstreifen befestigt sind, bevor die anderen Elektroden, insbesondere Kathoden oder Anoden, auf dem Separatorstreifen, insbesondere auf dessen Rückseite, angeordnet werden. Hierdurch ergibt sich, dass im Faltvorgang ein laminierter Elektrodenstreifen beziehungsweise ein laminierter Verbund aus Anoden, Kathoden und Separatorstreifen, gefaltet wird.

Erfindungsgemäß ist vorgesehen, dass der Elektrodenstreifen zum Falten an seinen Längsseiten mittels mehrerer Greifer an einander gegenüberliegenden Stellen zwischen jeder zweiten Elektrode gegriffen, auf Zug quergespannt und angehoben wird. Durch das Spannen des Elektrodenstreifens an seinen Längsseiten zwischen jeder zweiten Elektrode, wird der Separatorstreifen zwischen benachbarten Elektroden derart vorgespannt, dass eine Faltlinie entsteht, die durch ein einfaches Anheben der Greifer parallel zueinander dazu führt, dass der Elektrodenstreifen sich von selbst entlang der Faltlinie faltet - insbesondere aufgrund der Gewichtskraft der Elektroden, die beidseits der Faltlinie liegen. Hierdurch ist ein einfaches und energiesparendes Falten des Separatorstreifens beziehungsweise des Elektrodenstreifens mit den Elektroden gewährleistet.

Weiterhin ist bevorzugt vorgesehen, dass der Elektrodenstreifen zwischen jeder anderen zweiten Elektrode beim Anheben der Greifer unten gehalten wird. Hierdurch wird sichergestellt, dass der Faltvorgang auch dann durchführbar ist, wenn der Separatorstreifen derart steif ist, dass das Eigengewicht der Elektroden nicht ausreicht, dass der Separatorstreifen beim Anheben der Greifer eine der Faltlinien knickt beziehungsweise gefaltet wird. Besonders bevorzugt wird der Elektrodenstreifen zwischen jeder anderen zweiten Elektrode, also zwischen den Elektroden, zwischen denen die Greifer nicht greifen, mittels Druckluft unten gehalten. Dadurch erfolgt das unten Halten berührungsfrei und besonders schonend für den Elektrodenstreifen.

Gemäß einer bevorzugten Weiterbildung der Erfindung werden die Greifer zum Falten gleichzeitig angehoben und aufeinander zu bewegt, sodass der Elektrodenstreifen z-förmig gefaltet wird. Durch das gleichzeitige Anheben und aufeinander zu Bewegen, entstehen mehrere Faltlinien gleichzeitig und der Elektrodenstreifen, insbesondere der Separatorstreifen, wird an mehreren Stellen entlang seiner Längserstreckung gleichzeitig gefaltet. Hierdurch erfolgt der Faltvorgang in einer besonders kurzen Zeit. Alternativ ist es denkbar, die Greifer nacheinander anzuheben, wobei zwei gegenüberliegende Greifer stets gleichzeitig angehoben oder bewegt werden, um den Elektrodenstreifen schrittweise z-förmig zusammen zu falten.

Weiterhin wird der Elektrodenstreifen bevorzugt in Richtung eines Halters gefördert und schrittweise in den Halter hinein gefaltet. Durch das Fördern in Richtung des Halters wird auf den Elektrostreifen eine Druckkraft ausgeübt, die beim Hineinfalten des Elektrodenstreifens in den Halter insbesondere mittels der zuvor genannten Greifer erleichtert wird. Durch das Fördern des Elektrodenstreifens in Richtung des Falters wird außerdem erreicht, dass der Elektrodenstreifen bereits beim Falten in dem Halter platziert wird, sodass er im Anschluss zu dem Faltvorgang einfach gehandhabt werden kann, indem beispielsweise der Halter mitsamt dem Elektrodenstreifen weiter bewegt wird, oder indem der Elektrodenstreifen aus dem Halter als Paket entnommen wird.

Weiterhin ist bevorzugt vorgesehen, dass zumindest zwei gegenüberliegende Greifer entlang einer Kurvenbahn, die zumindest im Wesentlichen senkrecht zur Erstreckung des Elektrodenstreifens ausgerichtet ist, derart geführt werden, dass sie den Elektrodenstreifen schrittweise zwischen jeder zweiten Elektrode greifen und in den Halter durch die Kurvenbewegung hineinfalten. Durch die Bewegung entlang der Kurvenbahn, die insbesondere eine Kreisbahn ist, wird der Elektrodenstreifen mittels der Greifer gleichzeitig angehoben und in Richtung des Halters gefördert. Dadurch erfolgt ein automatisiertes Hineinfalten des Elektrodenstreifens in den Halter hinein. Vorzugsweise wird der bereits in den Halter hinein gefaltete Abschnitt des Elektrodenstreifens in dem Halter gehalten beziehungsweise zurückgehalten, sodass er nicht aus dem Halter wieder herausfällt. Weil sich der Elektrodenstreifen entlang der horizontalen Bahn erstreckt, könnte dies aufgrund des Eigengewichts der Elektroden ansonsten geschehen. Dabei wird insbesondere der Elektrodenstreifen nur an seinem oberen Ende in dem Halter zurückgehalten, wodurch eine besonders einfache und sichere Arretierung des bereits in den Halter hinein gefalteten Abschnitts des Elektrodenstreifens gewährleistet ist.

Weiterhin ist bevorzugt vorgesehen, dass der Halter zum Falten des Elektrodenstreifens zusätzlich oder alternativ zu der entlang einer Kurvenbahn geführten Greifer vertikal auf- und abbewegt wird. Wird der Elektrodenstreifen in Richtung des Halters gefördert und der Halter auf- und abbewegt, so wird der Elektrodenstreifen durch das Auf- und Ab-Bewegen des Halters gefaltet. Dadurch, dass der Halter vertikal bewegt wird, während der Elektrodenstreifen horizontal gefördert wird, wird durch die Hin- und Her-Bewegung der Elektrodenstreifen einmal nach oben und einmal nach unten, insbesondere am Ende der horizontalen Bahn, bewegt, wodurch Faltlinien/Stellen entstehen und der Elektrodenstreifen automatisch zusammengefaltet wird. Zweckmäßigerweise ist die Auf- und Ab-Bewegung des Halters auf die Förderbewegung des Elektrodenstreifens abgestimmt, sodass der Elektrodenstreifen stets zwischen zwei benachbarten Elektroden gefaltet wird.

Die erfindungsgemäße Stapelanlage mit den Merkmalen des Anspruchs 8 zeichnet sich dadurch aus, dass sie eine horizontal ausgerichtete Bahn zur Führung oder Ablage des Elektrodenstreifens während eines Faltvorgangs aufweist. Es ergeben sich hierdurch die bereits genannten Vorteile. Weitere Vorteile und bevorzugte Merkmale und Merkmalskombinationen ergeben sich insbesondere aus dem zuvor Beschriebenen sowie aus den Ansprüchen.

Erfindungsgemäß weist die Falteinrichtung eine Greifeinrichtung mit zumindest zwei, insbesondere mehr als zwei oder einer Vielzahl von Greifern auf, die den Längsseiten des Elektrodenstreifens oder der Bahn zugeordnet sind, sodass jeweils zwei Greifer einander gegenüberliegen, wobei die gegenüberliegenden Greifer dazu ausgebildet sind, den Elektrodenstreifen zwischen jeder zweiten Elektrode zu greifen, auf Zug quer zu spannen und anzuheben. Dadurch ist der zuvor beschriebene Faltvorgang einfach durchführbar und es ergeben sich die bereits genannten Vorteile.

Weiterhin ist bevorzugt vorgesehen, dass die Greifereinrichtung eine Einrichtung zum Untenhalten des Elektrodenstreifens zwischen jeder anderen zweiten Elektrode auf der horizontalen Bahn aufweist. Durch diese Einrichtung wird der Elektrodenstreifen somit zwischen jeder anderen zweiten Elektrode unten gehalten, während die Greifer zwischen jeder zweiten Elektrode den Elektrodenstreifen anheben. Hierdurch wird ein sicheres Falten beziehungsweise Zusammenfalten des Elektrodenstreifens in z-Form ermöglicht.

Weiterhin weist die Einrichtung bevorzugt zumindest eine Druckluftdüse auf, die mit einer Drucklufterzeugungseinrichtung verbunden oder verbindbar ist. Hierdurch wird ein berührungsfreies unten Halten beziehungsweise nieder Halten des Elektrodenstreifens auf einfache Art und Weise ermöglicht.

Außerdem weist die Stapelanlage bevorzugt einen Halter zur Aufnahme des gefalteten Elektrodenstreifens auf, wobei der Halter an einem Ende der Bahn angeordnet ist. In den Halter kann der Elektrodenstreifen beispielsweise schrittweise hinein gefaltet werden, wie zuvor bereits beschrieben.

Besonders bevorzugt weist die Greifeinrichtung zwei einander gegenüberliegende Greifer auf, die entlang einer Kurvenbahn, insbesondere Kreisbahn, geführt sind, um die Elektrodenstreifen anzuheben und in den Halter zu fördern. Es ergeben sich hierbei die zuvor bereits genannten Vorteile. Durch die Kreisbahn-Führung der Greifer ist eine einfache Kinematik gewährleistet, die eine aufwendige Robotik beziehungsweise Ansteuerung mehrerer Aktuatoren zum Bewegen der Greifer vermeidet. Damit ist eine kostengünstige Realisierung der Greifeinrichtung und der Falteinrichtung geboten.

Besonders bevorzugt weist die Stapelanlage zumindest eine der Bahn zugeordnete Fördereinrichtung zum Fördern des Elektrodenstreifens zu dem Halter auf, wobei der Halter vertikal bewegbar ist, um den Elektrodenstreifen zu falten, während er durch die Fördereinrichtung in den Halter gefördert wird. Es ergeben sich auch hierdurch die bereits genannten Vorteile.

Im Folgenden soll die Erfindung anhand der Zeichnung näher erläutert werden. Dazu zeigen
- Figur 1: einen Elektrodenstreifen zur Herstellung eines Elektrodenstapels in einer vereinfachten Draufsicht,
- Figur 2: ein erstes Ausführungsbeispiel einer Stapelanlage zum Falten des Elektrodenstreifens zu dem Elektrodenstapel in einer vereinfachten Draufsicht,
- Figur 3: die Stapelanlage in einer vereinfachten Seitenansicht in einem ersten Zustand,
- Figur 4: die Stapelanlage in einer vereinfachten Seitenansicht in einem zweiten Zustand,
- Figur 5: die Stapelanlage in einer vereinfachten Seitenansicht in einem dritten Zustand,
- Figur 6: ein zweites Ausführungsbeispiel der Stapelanlage in einer vereinfachten Seitenansicht und
- Figur 7: ein drittes Ausführungsbeispiel der Stapelanlage in einer vereinfachten Seitenansicht.

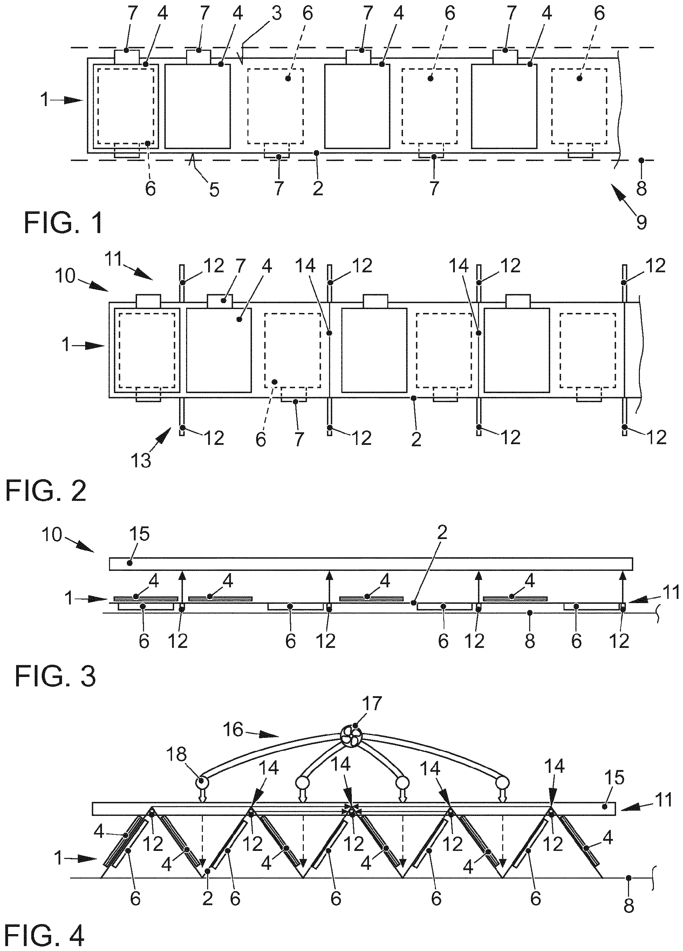

Figur 1 zeigt in einer vereinfachten Draufsicht einen Elektrodenstreifen 1, der zu einem Elektrodenstapel gefaltet werden soll. Dazu weist der Elektrodenstreifen 1 einen Separator 2 auf, der als Endlosmaterial oder vorgeschnitten abgelängt vorhanden ist. Auf eine Oberseite 3 des Separatorstreifens 2 sind mehrere Elektroden, vorliegend Anoden 4, gleichmäßig beabstandet zueinander angeordnet. An einem Ende des Separatorstreifens 2 sind zwei Anoden 4 direkt nebeneinander angeordnet. Im Übrigen sind auf der Unterseite 5 des Separatorstreifens 2 mehrere Elektroden, vorliegend Kathoden 6, gleichmäßig beabstandet zueinander angeordnet, sodass bis auf am Endbereich zwischen zwei Anoden 4 jeweils eine Kathode 6 auf der Rückseite des Separatorstreifens 2 liegt. Die Elektroden weisen Kontaktelemente 7 auf, die über den Separatorstreifen 2 seitlich vorstehen, um eine einfache elektrische Kontaktierung der Kathoden 6 und Anoden 4 zu gewährleisten. Dabei liegen die Kathoden 6 und Anoden 4 derart auf dem Separatorstreifen 2, dass die Kontaktelemente 7 der Anoden in eine erste Richtung und die Kontaktelemente 7 der Kathoden 6 in eine der ersten Richtung entgegengesetzte zweite Richtung weisen. Dadurch sind alle Kathoden 6 von einer Seite und alle Anoden 4 von der anderen Längsseite des Elektrodenstapels oder des Elektrodenstreifens 1 elektrisch kontaktierbar.

Vorteilhafterweise wird zur Herstellung des Separatorstreifens 1 zunächst der Separatorstreifen 2 in eine erste Laminationsanlage eingespannt. Der Separator 2 weist insbesondere mehrere Schichten auf, insbesondere eine Separatorschicht, eine keramische Schicht und eine AFL-Schicht (AFL = adhesive functional layer = klebende Funktionalschicht), die durch Druck- und Wärmeeinfluss einen festen Verbund mit sich und mit der jeweiligen Elektrode 4,6 bilden.

Der Separatorstreifen 2 wird abgewickelt und mithilfe eines Vakuumtisches zu einem Laminationsaggregat geführt. Während der Separator 2 zugeführt wird, nimmt ein erster Greifarm vereinzelt Anoden 4 aus einem Magazin und setzt diese in dem zuvor genannten definierten Abstand auf dem Separatorstreifen 2 ab. Zusammen mit einer Schutzfolie werden der durchgängige Separator 2 und die Anoden 4 durch eine beheizte Laminationspresse geführt, welche einen Laminationsvorgang bei einem Druck von 0,8 bis 1,2 MPa und einer Temperatur von 75°C bis 95°C durchführt. Anschließend wird der Separator 2 zusammen mit den dort befindlichen Anoden 4 optional wieder aufgerollt.

Anschließend wird der Separatorstreifen 2 erneut oder in eine zweite Laminationsanlage eingespannt, wobei unter gleichen Randbedingungen auf der Rückseite 5 die Kathoden nunmehr vereinzelt durch den ersten oder einen zweiten Greifarm, wie zuvor beschrieben, positioniert werden. Anschließend wird der Separatorstreifen 2 mit den Kathoden und den Anoden einem zweiten Laminierprozess durch die Laminationspresse oder eine weitere Laminationspresse geführt, um auch die Kathoden 6 zu laminieren.

Der so entstandene Elektrodenstreifen 1 wird entweder für eine spätere Verwendung aufgerollt oder bevorzugt direkt auf eine horizontal ausgerichtete Bahn 8 abgelegt. Vor dem Faltvorgang wird der Elektrodenstreifen 1 optional auf die gewünschte Länge zugeschnitten. Die Bahn 8 ist Bestandteil einer Stapelanlage 9, die außerdem eine Falteinrichtung 10 zum Falten des Elektrodenstreifens 1 zu einem Elektrodenstapel 20 aufweist.

Figur 2 zeigt in einer Draufsicht ein erstes Ausführungsbeispiel der Stapelanlage 9 in einer Draufsicht. Die Falteinrichtung 10 weist gemäß diesem Ausführungsbeispiel eine Greifeinrichtung 11 auf, die mehrere Greifelemente 12 aufweist, die insbesondere individuell bewegbar sind. Dabei sind die Greifelemente 12 jeweils den Längsseiten des Elektrodenstreifens 1 zugeordnet, wobei jeweils zwei Greifelemente 12 einander gegenüberliegen und ein Greifelementpaar 13 bilden. Die Greifelemente 12 sind dabei derart voneinander entlang der Längserstreckung des Separatorstreifens 2 beziehungsweise der Bahn 8 angeordnet, dass sie zwischen jeder zweiten Elektrode 4,6 liegen. Die Greifelemente 12 sind derart filigran ausgebildet, dass sie die Separatorfolie 2 zwischen den Elektroden greifen können. Sobald die Separatorfolien 2 gegriffen haben, werden die Greifelemente 12 jedes Paares 13 von Greifelementen 12 voneinander weg bewegt, sodass sie eine Zugspannung auf die Separatorfolie 2 quer zu ihrer Längserstreckung ausüben. Durch diese Zugspannung entstehen in der Separatorfolie linienförmige Abschnitte mit hoher Spannung, die Faltlinien 14 bilden.

Figur 3 zeigt hierzu eine Seitenansicht der Stapelanlage 9 mit dem Elektrodenstreifen 1, der auf der Bahn 8 aufliegt. Die Greifelemente 12 sind gemäß dem vorliegenden Ausführungsbeispiel oberhalb der Bahn beziehungsweise des Elektrodenstreifens 1 durch einen Greifkopf 15 gehalten, welcher die Greifelemente 12 führt und durch Aktuatoren wie gewünscht bewegt. Nach dem seitlichen Greifen des Separatorstreifens 2 werden die Greifelemente 12 nach oben von der Bahn 8 weg bewegt, wie durch Pfeile in Figur 3 gezeigt. Dadurch wird der Elektrodenstreifen 1 zwischen jeder zweiten Elektrode mittels der Greifer 12 angehoben, wie in Figur 4 in einer vereinfachten Seitenansicht gezeigt, sodass sich ein z-förmiger oder zick-zackförmiger Verlauf des Elektrodenstreifens 1 ergibt. Gleichzeitig werden die Greifer 12 aufeinander zu, beispielsweise in die Mitte, wie in Figur 1 beispielhaft durch Pfeile gezeigt, bewegt, sodass ein Elektrodenstapel 20 entsteht, bei welchen Anoden und Kathoden abwechselnd übereinander beziehungsweise aufeinander liegen und durch den Separatorstreifen 2 jeweils voneinander getrennt sind. Hierdurch ist ein einfaches und kostengünstiges Falten des Elektrodenstreifens 1 gewährleistet.

Durch die erzeugten Faltlinien 14 knickt der Separatorstreifen 2 beim Anheben der Greifer 12 vorteilhaft ein, sodass die gewünschte Faltung entsteht. Dabei kann bereits das Eigengewicht der Elektroden ausreichen, um die Faltung zu gewährleisten. Zusätzlich ist optional jedoch vorgesehen, wie in Figur 4 gezeigt, dass eine Einrichtung zum Untenhalten des Elektrodenstreifens 1 beziehungsweise des Separatorstreifens 2 zwischen jeder zweiten anderen Elektrode auf der Bahn 8 vorhanden ist. Diese Einrichtung 16 weist beispielsweise gemäß dem vorliegenden Ausführungsbeispiel eine Drucklufterzeugungseinrichtung 17 auf, die mit mehreren Druckluftdüsen 18 strömungstechnisch verbunden ist, um mittels der Druckluftdüsen 18 einen Druckluftstrom auf den Separatorstreifen 2 auszuüben. Dabei sind die Druckluftdüsen 18 gleichmäßig angeordnet, sodass zwischen jeder zweiten anderen Elektrode Druckluft auf den Separatorstreifen 2 ausgeübt wird, sodass in diesem Abschnitt der Separatorstreifen durch die Druckluft an der Bahn 8 unten gehalten wird.

Somit wird durch ein Zusammenspiel von Druckluft und Gravitation eine untere Faltkante an dem Separatorstreifen 2 erzeugt, die zu dem vorteilhaften Faltmuster führt. Am Ende entsteht ein z-förmig gestapelter Elektrodenstapel 20 und die Greifelemente 12 lösten sich von dem Separatorstreifen 2 und fahren seitlich aus der Faltung heraus, sobald der Elektrodenstapel 20 durch einen Entnahmegreifer oder einen Halter in seiner Faltposition gesichert ist. Der Entnahmegreifer wird beispielsweise seitlich oder von unten dem Elektrodenstapel 20 zugeführt, um ihn der Greifeinrichtung 11 zu entnehmen.

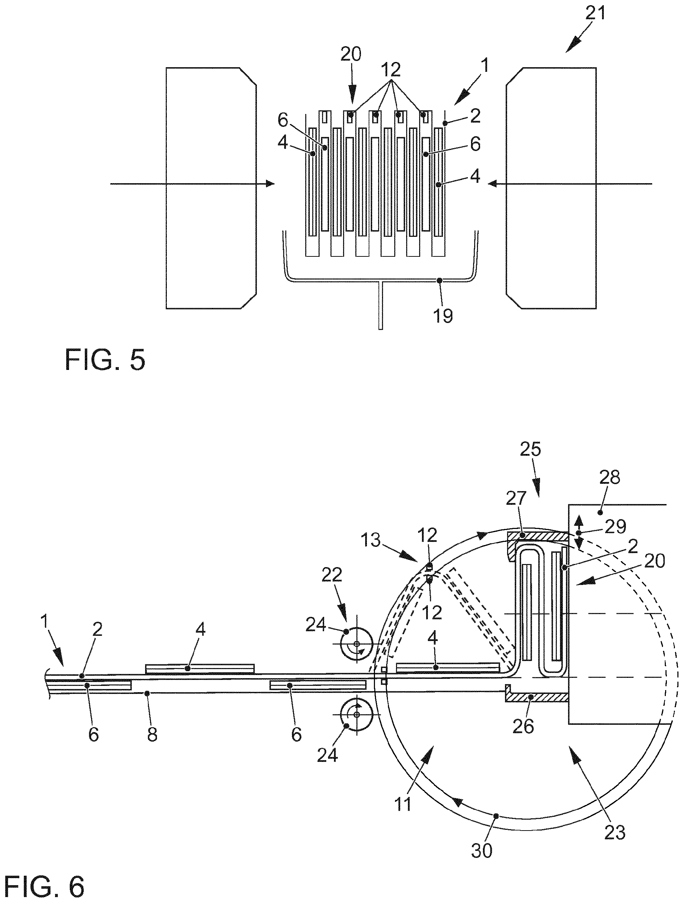

Figur 5 zeigt hierzu in einer vereinfachten Darstellung einen Entnahmegreifer 19, welcher den Elektrodenstapel 20, wie er in Figur 5 gezeigt ist und sich aus dem zuvor beschriebenen Faltvorgang ergibt, greift und insbesondere einer Presseinrichtung 21 zuführt, welche den Elektrodenstapel 20 zusammenpresst, wie durch Pfeile in Figur 5 gezeigt. Anschließend wird der Elektrodenstapel 20 bevorzugt durch ein Klebeband oder dergleichen in seiner Ausbildung insbesondere an den offenen Kanten fixiert und kann für die Verwendung in einem Energiespeicher in einer Prozesskette weitergegeben werden. Durch die Presseinrichtung 21 wird der Stapel, wie bereits erwähnt, gepresst, und zusätzlich bevorzugt auf Feineinschlüsse überprüft. Dazu wird der Stapel bevorzugt mit einer elektrischen Spannung beaufschlagt und parallel der Ohmsche Widerstand gemessen. Ist der Ohmsche Widerstand geringer als ein vorgebbarer Grenzwert, beispielsweise geringer als 5 Mega-Ohm, so hat die angelegte Spannung den Separator beziehungsweise Separatorstreifen an den Stellen, in denen ein Partikel auf der Oberfläche liegt, durchschlagen. Entsprechend wird der Stapel 20 ausgesondert. Die angelegte Spannung variiert bevorzugt je nach Separator zwischen 25 V bis 1 kV. Erst nach erfolgreicher Überprüfung wird der Elektrodenstapel 20 weitergegeben.

Optional ist eine Temperierung der Presswerkzeuge der Presseinrichtung 21 vorhanden, um eine Verbindung der Haftvermittler mit den Elektroden 4,6 und Separatorüberständen zu bewirken, sodass eine Fixierung mit dem Klebeband nicht notwendig ist.

Figur 6 zeigt in einer Seitenansicht ein weiteres Ausführungsbeispiel der Stapelanlage 9, wobei aus den vorhergehenden Ausführungsbeispielen bereits bekannte Elemente mit den gleichen Bezugszeichen versehen sind und insofern auf die obenstehende Beschreibung verwiesen wird. Im Folgenden soll im Wesentlichen nur auf die Unterschiede eingegangen werden.

Im Unterschied zu dem vorhergehenden Ausführungsbeispiel wird der Elektrodenstreifen 1 nicht gleichzeitig, sondern schrittweise gefaltet. Dazu wird der Elektrodenstreifen 1 auf der Bahn 8 mittels einer Fördereinrichtung 22 in Richtung eines Bahnendes 23 gefördert. Die Fördereinrichtung 22 weist beispielsweise Förderrollen oder Walzen 24 auf, welche den Elektrodenstreifen 1 von zwei Seiten beaufschlagen und gegensinnig angetrieben werden, um ihn in Richtung des Bahnendes 23 horizontal zu fördern.

Dem Bahnende 23 ist ein Halter 25 zugeordnet. Der Halter 25 weist eine untere Auflage 26 und einen oberen Niederhalter 27 auf, zwischen denen der Elektrodenstapel 20 formbar ist. Der Halter 25 ist dabei an einem starren Gehäuse 28 oder dergleichen gehalten. Der Niederhalter 27 ist dabei insbesondere in der Höhe verstellbar, wie durch einen Doppelpfeil 29 gezeigt.

Dem Bahnende 23 ist außerdem eine Variante der Greifeinrichtung 11 zugeordnet. Im Unterschied zu dem vorhergehenden Ausführungsbeispiel weist die Greifeinrichtung 11 ein Greiferpaar 13 mit zwei einander gegenüberliegenden Greifern 12 auf, die auf der jeweiligen Längsseite der Bahn 8 oder des Elektrodenstreifens 1 jeweils entlang einer Kurvenbahn 30 bewegt werden. Die Kurvenbahn 30 ist dabei als Kreisbahn ausgebildet und weist ihren Mittelpunkt in etwa auf Höhe des Halters 25 auf. Dabei werden die Greifer 12 derart bewegt, dass sie den Elektrodenstreifen 1 von der Bahn 8 von unten anheben und durch die Kurvenführung in Richtung des Halters 25 bewegen. Dadurch wird der Elektrodenstreifen bei jeder Umdrehung der Greifer 12 entlang der Kurvenbahn 18 in den Halter hinein gefaltet. Dabei ist insbesondere vorgesehen, dass der Niederhalter 27 angehoben wird, wenn das Greiferpaar 13 den Elektrodenstreifen 1 in den Halter 25 hinein bewegt, und herunter, nachdem der Elektrodenstreifen in den Halter 25 hinein gefaltet wurde, damit ein Zurückfalten oder Entfalten verhindert ist. Das Zusammenspiel aus Niederhalter 27 und Bewegung der Greifer 12 kann auch durch eine mechanische Kopplung dieser beiden erreicht werden. Vorzugsweise greifen die Greifer 12 auch hier den Elektrodenstreifen beziehungsweise den Separatorstreifen 2 derart, dass er quer auf Zug beansprucht wird, wodurch eine Faltlinie entsteht, die das Falten erleichtert.

Durch dieses schrittweise Falten des Elektrodenstapels 20 ist ein kontinuierlicher Faltprozess gewährleistet, der auch auf kleinem Raum einen Elektrodenstapel 20 mit vielen aufeinander gestapelten Elektroden herstellen kann. Während das zweite Ausführungsbeispiel mit nur einem Greiferpaar 13 beschrieben wurde, ist optional vorgesehen, dass mehrere Greiferpaare 13 vorhanden sind, die entlang der Kurvenbahn 30 geführt werden, sodass, wenn ein gelöstes Greiferpaar 13 nach dem Lösen in der Kreisbahn weitergeführt wird, bereits ein anderes Greiferpaar 13 erneut in den Separatorstreifen 2 gegriffen und in Richtung des Halters 20 bewegt hat. Insbesondere weist die Greifeinrichtung 11 vier derartiger Greiferpaare 13 auf, um eine vorteilhafte Taktung zu gewährleisten.

Optional sind der Niederhalter 27 und die untere Auflage 26 axial beziehungsweise horizontal bewegbar, um den bereits in dem Halter 20 befindlichen Elektrodenstapelteil gegen das Gehäuse 28 zu pressen und damit eine Vorpressung des Elektrodenstapels 20 nach jedem erfolgten Faltvorgang durchzuführen.

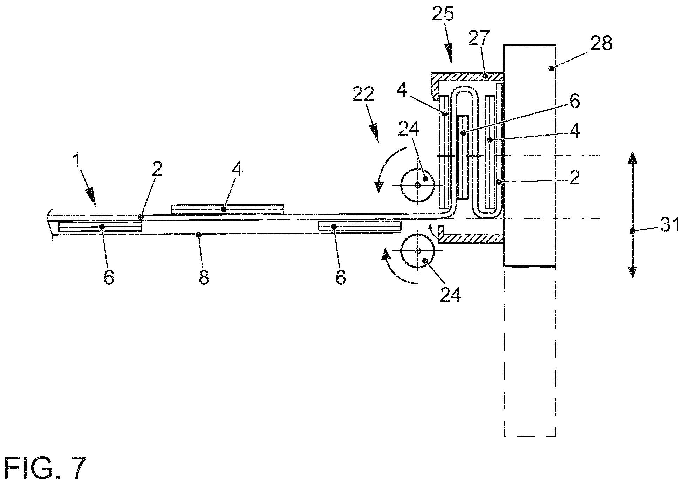

Figur 7 zeigt ein drittes Ausführungsbeispiel der Stapelanlage 1, das sich von dem vorhergehenden Ausführungsbeispiel der Figur 6 dadurch unterscheidet, dass der Faltvorgang nicht durch eine Greifeinrichtung 11 erzielt wird, sondern im Wesentlichen allein durch ein Aufund Ab-Bewegen beziehungsweise ein vertikales Bewegen des zuvor genannten Halters 25. Dieser ist hierzu an dem Gehäuse 28 insgesamt vertikal bewegbar gelagert, wie durch einen Doppelpfeil 31 angedeutet.

Wie zuvor beschrieben wird der Elektrodenstreifen 1 insbesondere kontinuierlich in Richtung des Halters 25 durch die Fördereinrichtung 22 gefördert. Durch die Fördereinrichtung 22 mit den Förderwalzen 24 in Kombination mit dem vertikal verfahrbaren Halter 25, der schlittenartig ausgebildet ist, werden die zuvor genannten Faltungen des Elektrodenstreifens 1 gebildet. Dabei entsteht eine Faltung des vor den Walzen 24 befindlichen Elektrodenstreifens 1. Daraufhin fasst der obere Niederhalter 27 nach und fixiert die entstandene Faltung, wie zuvor beschrieben. Anschließend fährt der Halter 25 wieder nach oben und faltet den Elektrodenstreifen 1 erneut. Dabei werden nach und nach die Elektroden aufgefaltet beziehungsweise aufeinander gestapelt.

Die zuvor beschriebenen Ausführungsbeispiele haben gemein, dass die Förderung des Elektrodenstreifens 1 horizontal erfolgt und dadurch die Integration der Stapelanlage 9 in den Herstellungsprozess des Elektrodenstreifens 1 vorteilhaft einbindbar ist. Gemäß einem weiteren, hier nicht dargestellten Ausführungsbeispiel ist jedoch vorgesehen, dass der Elektrodenstreifen nicht horizontal, sondern vertikal oder in einer vertikalen Ebene ausgerichtet gefördert wird.

Der wie zuvor beschrieben hergestellte Elektrodenstapel 20 beziehungsweise ein mithilfe des Elektrodenstapels 20 gefertigter Energiespeicher wird bevorzugt in Kraftfahrzeugen, insbesondere in Funktion einer Traktionsbatterie, eingesetzt. Jedoch ist die Verwendung des Elektrodenstapels 20 beziehungsweise des Energiespeichers auch in anderen Mobilanwendungen, wie beispielsweise Mobiltelefonen oder tragbaren Computern einsetzbar.

### Bezugszeichenliste

- 1: Elektrodenstreifen
- 2: Separatorstreifen
- 3: Oberseite
- 4: Anode
- 5: Unterseite
- 6: Kathode
- 7: Kontaktelement
- 8: Bahn
- 9: Stapelanlage
- 10: Falteinrichtung
- 11: Greifeinrichtung
- 12: Greifer
- 13: Greiferpaar
- 14: Faltlinie
- 15: Greifkopf
- 16: Einrichtung
- 17: Drucklufterzeugungseinrichtung
- 18: Druckluftdüse
- 19: Entnahmegreifer
- 20: Elektrodenstapel
- 21: Presseinrichtung
- 22: Fördereinrichtung
- 23: Bahnende
- 24: Walze
- 25: Halter
- 26: Auflage
- 27: Niederhalter
- 28: Gehäuse
- 29: Doppelpfeil
- 30: Kurvenbahn
- 31: Doppelpfeil

## Patentansprüche

1. Verfahren zum Herstellen eines Elektrodenstapels (20) für einen Energiespeicher eines Kraftfahrzeugs, wobei als Elektroden Kathoden (6) und Anoden (4) abwechselnd unter Zwischenschaltung eines Separatorstreifens (2) aufeinander gestapelt werden, wobei der Separatorstreifen (2) erst mit den Kathoden (6) und Anoden (4) belegt wird, sodass ein Elektrodenstreifen (1) entsteht, und wobei danach der Elektrodenstreifen (1) zum Stapeln der Kathoden (6) und Anoden (4) aufeinander mehrfach gefaltet wird, wobei der Elektrodenstreifen (1) für das Falten in einer horizontalen Ebene ausgerichtet und davon ausgehend abschnittsweise oder insgesamt zwischen den Elektroden gefaltet wird, **dadurch gekennzeichnet, dass** der Elektrodenstreifen (1) zum Falten an seinen Längsseiten mittels mehrerer Greifer (12) an einander gegenüberliegenden Stellen zwischen jeder zweiten Elektrode (4,6) gegriffen, auf Zug quer gespannt und angehoben wird.

2. Verfahren nach Anspruch 1, **dadurch gekennzeichnet, dass** der Elektrodenstreifen vor dem Falten laminiert wird, insbesondere nach dem Belegen mit Kathoden oder Anoden einmal und nach dem Belegen mit Anoden oder Kathoden noch einmal.

3. Verfahren nach Anspruch 1, **dadurch gekennzeichnet, dass** der Elektrodenstreifen (1) zwischen jeder anderen zweiten Elektrode beim Anheben der Greifer (12) insbesondere mittels Druckluft unten gehalten wird.

4. Verfahren nach einem der Ansprüche 1 und 3, **dadurch gekennzeichnet, dass** die Greifer zum Falten gleichzeitig angehoben und horizontal aufeinander zu bewegt werden, sodass der Elektrodenstreifen (1) z-förmig gefaltet wird.

5. Verfahren nach einem der Ansprüche 1 bis 3, **dadurch gekennzeichnet, dass** der Elektrodenstreifen in Richtung eines Halters (25) gefördert und schrittweise in den Halter (25) hinein gefaltet wird.

6. Verfahren nach Anspruch 5, **dadurch gekennzeichnet, dass** zumindest zwei gegenüberliegende Greifer (12) entlang einer Kurvenbahn (30), die zumindest im Wesentlichen senkrecht zur Erstreckung des Elektrodenstreifens (1) oder der Bahn (8) ausgerichtet ist, derart geführt werden, dass sie den Elektrodenstreifen (1) schrittweise zwischen jeder zweiten Elektrode (4,6) greifen und in den Halter (25) durch die Kurvenbewegung hinein falten.

7. Verfahren nach einem der Ansprüche 5 und 6, **dadurch gekennzeichnet, dass** der Halter (25) zum Falten des Elektrodenstreifens (1) vertikal auf- und abbewegt wird.

8. Stapelanlage (10) zum Herstellen eines Elektrodenstapels (20), insbesondere zur Durchführung eines Verfahrens nach einem der Ansprüche 1 bis 7, mit einer Falteinrichtung zum Falten eines Elektrodenstreifens (1), der einen mit Anoden (4) und Kathoden (6) belegten Separatorstreifen (2) aufweist, zu einem Elektrodenstapel (20), bei welchem Anoden (4) und Kathoden (6) abwechselnd aufeinander unter Zwischenschaltung des Separatorstreifens (2) gestapelt sind, mit zumindest einer horizontal ausgerichteten Bahn zur Führung oder Ablage des Elektrodenstreifens (1) während eines Faltvorgangs, **gekennzeichnet durch** eine Greifeinrichtung (11) mit zumindest zwei, insbesondere einer Vielzahl von Greifern (12), die den Längsseiten des Elektrodenstreifens (1) zugeordnet oder zuordenbar sind, sodass jeweils zwei Greifer einander gegenüberliegen, wobei die Greifer (12) dazu ausgebildet sind, den Elektrodenstreifen (1) zwischen jeder zweiten Elektrode (4,6) zu greifen, auf Zug quer zu spannen und anzuheben.

9. Stapelanlage nach Anspruch 8, **dadurch gekennzeichnet, dass** die Greifeinrichtung (11) eine Einrichtung (16) zum Untenhalten des Elektrodenstreifens (1) zwischen jeder anderen zweiten Elektrode (4,6) auf der horizontalen Bahn (8) aufweist.

10. Stapelanlage nach Anspruch 8 oder 9, **dadurch gekennzeichnet, dass** die Einrichtung (16) zumindest eine Druckluftdüse (18) aufweist, die mit einer Drucklufterzeugungseinrichtung (17) verbunden oder verbindbar ist.

11. Stapelanlage nach einem der Ansprüche 8 bis 10, **dadurch gekennzeichnet, dass** einem Bahnende (23) der Bahn (8) ein Halter (25) zur Aufnahme des gefalteten Elektrodenstreifens (1) zugeordnet ist.

12. Stapelanlage nach Anspruch 11, **dadurch gekennzeichnet, dass** zwei einander gegenüberliegende Greifer (12) der Greifeinrichtung (11) entlang einer Kurvenbahn (30), insbesondere Kreisbahn, geführt sind, um den Elektrodenstreifen (1) anzuheben und in den Halter (25) zu fördern.

13. Stapelanlage nach einem der Ansprüche 8 bis 12, **dadurch gekennzeichnet, dass** der Bahn (8) zumindest eine Fördereinrichtung (22) zum Fördern des Elektrodenstreifens (1) zu dem Halter (25) aufweist, wobei der Halter (25) vertikal bewegbar ist, um den Elektrodenstreifen (1) zu falten, während er durch die Fördereinrichtung in den Halter (25) gefördert wird.

## Claims

1. Method for producing an electrode stack (20) for an energy store of a motor vehicle, wherein cathodes (6) and anodes (4) are alternately stacked on top of one another with a separator strip (2) interposed, wherein first the cathodes (6) and anodes (4) are laid on the separator strip (2), so that an electrode strip (1) is produced, and wherein after that the electrode strip (1) is folded multiple times to stack the cathodes (6) and the anodes (4) on top of one another, wherein the electrode strip (1) is oriented in a horizontal plane for the folding, and from there is folded in sections or as a whole between the electrodes, **characterized in that**, for folding at its longitudinal sides, the electrode strip (1) is gripped by means of a number of grippers (12) at opposite points between every second electrode (4, 6), tensioned transversely and raised.

2. Method according to Claim 1, **characterized in that** the electrode strip is laminated before the folding, in particular once after the cathodes or anodes have been laid on it and once again after the anodes or cathodes have been laid on it.

3. Method according to Claim 1, **characterized in that** the electrode strip (1) is held down, in particular by means of compressed air, between every other second electrode when the grippers (12) are raised.

4. Method according to one of Claims 1 and 3, **characterized in that**, for the folding, the grippers are raised simultaneously and moved horizontally towards one another, so that the electrode strip (1) is folded in a z-shaped manner.

5. Method according to one of Claims 1 to 3, **characterized in that** the electrode strip is fed in the direction of a holder (25) and incrementally folded into the holder (25).

6. Method according to Claim 5, **characterized in that** at least two grippers (12) lying opposite one another are guided along a curved track (30), which is oriented at least essentially perpendicularly to the extent of the electrode strip (1) or the track (8), in such a way that they grip the electrode strip (1) incrementally between every second electrode (4, 6) and fold it into the holder (25) in response to the movement on a curve.

7. Method according to either of Claims 5 and 6, **characterized in that** the holder (25) is moved vertically up and down to fold the electrode strip (1).

8. Stacking system (10) for producing an electrode stack (20), in particular for carrying out a method according to one of Claims 1 to 7, comprising a folding device for folding an electrode strip (1), which has a separator strip (2) on which anodes (4) and cathodes (6) are laid, to form an electrode stack (20), in which anodes (4) and cathodes (6) are alternately stacked on top of one another with the separator strip (2) interposed, and comprising at least one horizontally oriented track for guiding or laying the electrode strip (1) during a folding operation, **characterized by** a gripping device (11) comprising at least two grippers (12), in particular a plurality of grippers (12), which are assigned or can be assigned to the longitudinal sides of the electrode strip (1), so that in each case two grippers lie opposite one another, wherein the grippers (12) are designed to grip the electrode strip (1) between every second electrode (4, 6), tension it transversely and raise it.

9. Stacking system according to Claim 8, **characterized in that** the gripping device (11) has a device (16) for holding down the electrode strip (1) between every other second electrode (4, 6) on the horizontal track (8).

10. Stacking system according to Claim 8 or 9, **characterized in that** the device (16) has at least one compressed-air nozzle (18), which is connected or can be connected to a compressed-air generating device (17).

11. Stacking system according to one of Claims 8 to 10, **characterized in that** a holder (25) for receiving the folded electrode strip (1) is assigned to a track end (23) of the track (8).

12. Stacking system according to Claim 11, **characterized in that** two grippers (12) lying opposite one another of the gripping device (11) are guided along a curved track (30), in particular a circular track, in order to raise the electrode strip (1) and feed it into the holder (25).

13. Stacking system according to one of Claims 8 to 12, **characterized in that** the track (8) has at least one feeding device (22) for feeding the electrode strip (1) to the holder (25), wherein the holder (25) is vertically movable, in order to fold the electrode strip (1) while it is being fed into the holder (25) by the feeding device.

## Revendications

1. Procédé de réalisation d'un empilement d'électrodes (20) destiné à un accumulateur d'énergie d'un véhicule automobile, des cathodes (6) et des anodes (4) étant empilées en tant qu'électrodes alternativement les unes sur les autres avec interposition d'une bande de séparation (2), la bande de séparation (2) étant d'abord recouverte des cathodes (6) et des anodes (4) de façon à obtenir une bande d'électrodes (1), et la bande d'électrodes (1) étant ensuite pliée plusieurs fois pour empiler les cathodes (6) et les anodes (4) les unes sur les autres, la bande d'électrodes (1) étant orientée pour le pliage dans un plan horizontal et étant, à partir de là, partiellement ou entièrement pliée entre les électrodes, **caractérisée en ce que,** pour effectuer le pliage, la bande d'électrodes (1) est saisie entre une électrode (4, 6) sur deux sur ses côtés longitudinaux au moyen d'une pluralité de pinces (12) à des emplacements opposés les uns autres, est serrée transversalement et est soulevée.

2. Procédé selon la revendication 1, **caractérisé en ce que** la bande d'électrodes est stratifiée avant le pliage, en particulier une fois après avoir été pourvue de cathodes ou d'anodes et une fois encore après avoir été pourvue d'anodes ou de cathodes.

3. Procédé selon la revendication 1, **caractérisé en ce que** la bande d'électrodes (1) est maintenue entre une autre électrode sur deux lorsque la pince (12) est soulevée, notamment par air comprimé.

4. Procédé selon l'une des revendications 1 et 3, **caractérisé en ce que,** pour effectuer le pliage, les pinces sont soulevées simultanément et déplacées horizontalement l'une vers l'autre de façon à plier la bande d'électrode (1) en forme de Z.

5. Procédé selon l'une des revendications 1 à 3, **caractérisé en ce que** la bande d'électrodes est acheminée en direction d'un support (25) et pliée progressivement dans le support (25).

6. Procédé selon la revendication 5, **caractérisé en ce que** au moins deux pinces opposées (12) sont guidées le long d'un chemin incurvé (30) qui est au moins sensiblement perpendiculaire à l'extension de la bande d'électrodes (1) ou du chemin (8) de manière à saisir pas à pas la bande d'électrodes (1) entre une électrode (4, 6) sur deux et à la plier dans le support (25) par le mouvement incurvé.

7. Procédé selon l'une des revendications 5 et 6, **caractérisé en ce que,** pour effectuer le pliage de la bande d'électrode (1), le support (25) est déplacé verticalement vers le haut et vers le bas.

8. Système d'empilement (10) destiné à réaliser un empilement d'électrodes (20), notamment pour mettre en œuvre un procédé selon l'une des revendications 1 à 7, ledit système comprenant un dispositif de pliage destiné à plier une bande d'électrodes (1), qui comporte une bande de séparation (2) pourvue d'anodes (4) et de cathodes (6), pour obtenir un empilement d'électrodes (20) dans lequel des anodes (4) et des cathodes (6) sont empilées alternativement les unes sur les autres avec interposition de la bande de séparation (2), avec au moins un chemin orienté horizontalement et destiné à guider ou déposer la bande d'électrodes (1) au cours d'un processus de pliage, **caractérisé par** un dispositif de préhension (11) comprenant au moins deux pinces, en particulier une pluralité de pinces (12), qui sont associées ou peuvent être associées aux côtés longitudinaux de la bande d'électrodes (1) de sorte que deux pinces soient opposées l'une à l'autre, les pinces (12) étant conçues pour saisir la bande d'électrodes (1) entre une électrode (4, 6) sur deux, pour la serrer transversalement et pour la soulever.

9. Système d'empilement selon la revendication 8, **caractérisé en ce que** le dispositif de préhension (11) comporte un dispositif (16) de maintien de la bande d'électrodes (1) entre une autre électrode (4, 6) sur deux sur le chemin horizontal (8).

10. Système d'empilement selon la revendication 8 ou 9, **caractérisé en ce que** le dispositif (16) comporte au moins une buse d'air comprimé (18) qui est ou peut être reliée à un dispositif générateur d'air comprimé (17).

11. Système d'empilement selon l'une des revendications 8 à 10, **caractérisé en ce que** un support (25) destiné à recevoir la bande d'électrodes (1) pliée est associé à une extrémité (23) du chemin (8).

12. Système d'empilement selon la revendication 11, **caractérisé en ce que** deux pinces opposées (12) du dispositif de préhension (11) sont guidées le long d'un chemin incurvé (30), notamment circulaire, pour soulever la bande d'électrodes (1) et l'acheminer jusque dans le support (25).

13. Système d'empilement selon l'une des revendications 8 à 12, **caractérisé en ce que** le chemin (8) comporte au moins un dispositif d'acheminement (22) destiné à acheminer la bande d'électrodes (1) vers le support (25), le support (25) étant mobile verticalement pour plier la bande d'électrodes (1) pendant qu'elle est acheminée jusque dans le support (25) par le dispositif d'acheminement.
